# EUROPÄISCHE PATENTANMELDUNG

(11) **EP 1 762 292 A1**
(43) Veröffentlichungstag der Anmeldung: **14.03.2007**
(21) Anmeldenummer: 06120445.9
(22) Anmeldetag: 11.09.2006
(51) Int. Cl.: B01D 46/02, B01D 46/54

(54) **Einrichtung zur Reinigung von Luft**

(30) Priorität: 13.09.2005 DE 102005043791
(71) Anmelder: MANN+HUMMEL GmbH, 71638 Ludwigsburg (DE); Keller Lufttechnik GmbH + Co. KG, 73230 Kirchheim unter Teck (DE)
(72) Erfinder: Moser, Nikolaus, 71254, Ditzingen (DE); Seipler, Dieter, 71229, Leonberg (DE); Hofmeister, Marcel, 71638, Ludwigsburg (DE); Keller, Horst, 73230, Kirchheim (DE); Stolz, Ulrich, 73230, Kirchheim (DE)

(57) **Zusammenfassung**

Es wird eine Einrichtung zum Reinigen von Luft beschrieben. Diese besteht aus einem Gehäuse und einem in dem Gehäuse angeordneten Gebläse sowie einem Filtersystem. Das Gehäuse selbst hat Einlassöffnungen zum Zuführen der zu reinigenden Luft und Auslassöffnungen zum Ableiten der gereinigten Luft. Das Filtersystem besteht aus folgenden Filtern: wenigstens einem schlauch- oder beutelförmigen Vliesfilter, der über einer Trägerstruktur angeordnet ist und wenigstens einem Sekundärfilterelement, welches eine Filterfeinheit aufweist, die geringer ist als die Filterfeinheit des Vliesfilters. Die gesamte Einrichtung wird stationär oder mobil in Bereichen kleiner bis hoher Staubkonzentrationen angeordnet. Die gereinigte Luft wird dem Bereich mit der höheren lokalen Staubkonzentration zugeführt und senkt damit die lokale Konzentration signifikant ab.

## Beschreibung

### Technisches Gebiet

Die Erfindung betrifft eine Einrichtung zum Reinigen von Luft, insbesondere von Staub und Feinstaub, welche in einem Gehäuse angeordnet ist und wenigstens ein Filtersystem aufweist.

### Stand der Technik

Aus der DE 22 55 868 ist ein Raumluftreinigungsgerät bekannt, bei dem die verunreinigte Luft mittels eines Gebläses durch eine Lufteinlassöffnung in einen Behälter gesaugt und durch eine Reihe von Filtern hindurchgeführt wird. Die Filteranordnung weist einen Staubfilter, einen elektrostatischen Staubsammler, ein geerdetes metallisches Filterelement, einen chemisch wirkenden Filter und einen Aktivkohlefilter auf. Ein Nachteil dieser Einrichtung ist darin zu sehen, dass eine Vielzahl von unterschiedlichen Filtersystemen erforderlich ist, die regelmäßig ausgetauscht bzw. gewartet oder gereinigt werden müssen. Dies stellt einen hohen zusätzlichen Aufwand dar und verursacht erhebliche Kosten.

Es ist ferner aus der DE 100 64 911 ein Aerosolabscheider bekannt, wobei aerosolhaltiges Rohgas über mehrere Demistoren geführt wird und eine Aerosolabscheidung nach einer Koaleszierung der Aerosole erfolgt. Eine Staubabscheidung ist hier nicht vorgesehen.

Aus der EP 1 445 011 ist ein Luftreinigungsgebläse bekannt. Auch dieses dient zum Entfernen von Staubschmutzpartikel oder dergleichen Verunreinigungen aus der Raumluft und befeuchtet den durchgeführten Luftstrom mittels eines Flüssigmediums. Die Verunreinigungen werden in einem Reservoir für das Flüssigmedium gesammelt und können ausgetragen werden. Dieses Luftreinigungsgebläse wird insbesondere dort angewendet, wo eine starke Staub- oder Schmutzbildung auftritt, beispielsweise bei Baumaßnahmen in Innenräumen. Ein Nachteil dieses Systems besteht darin, dass durch dieses System nur relativ grobe Partikel ausgetragen werden können und ein hoher Luftdurchsatz sowie eine hohe Filtrationsleistung nicht möglich sind, da eine Übertragung der Partikel aus der Luft in die Flüssigkeit erfolgen muss.

### Offenbarung der Erfindung

Der Erfindung liegt die Aufgabe zugrunde, die genannten Nachteile zu vermeiden und eine Einrichtung zur Reinigung von großen Luftmengen zu schaffen, die eine hohe Filtrationsleistung bei gleichzeitiger hoher Filtrationsgüte erbringt.

Diese Aufgabe wird durch die Merkmale des unabhängigen Anspruches 1 gelöst.

Der wesentliche Vorteil der Erfindung liegt darin, dass die Einrichtung ein Filtersystem aufweist, bei dem ein Vliesfilter-Array vorgesehen ist, welches schlauch- oder beutelförmig angeordnet ist und sich auf einer Trägerstruktur befindet. Mit dem Vliesfilter besteht die Möglichkeit, bei einem geringen Differenzdruck über das Element eine sehr hohe Filtergüte zu erreichen. Das Vliesfilterelement ist in der Lage, selbst Feinstaub aufgrund der Tiefenwirkung aufzunehmen und zuverlässig aus der zugeführten Luft auszufiltern. Die gesamte Einrichtung wird stationär in Bereichen hoher Staubkonzentrationen angeordnet.

In einer Ausgestaltung der Erfindung ist die Trägerstruktur für das Vliesfilterelement ein Sekundärfilterelement, vorzugsweise aus Membranwerkstoff. Dieses erfüllt zum einen die Aufgabe, die Stabilität des Vliesfilters zu erhöhen, andererseits auch die Zuverlässigkeit des Filters bzgl. des Abscheidegrades weiter zu verbessern. Insbesondere haben die Sekundärfilterelemente die Aufgabe, bei einem Austausch des primären Filterelementes einen Eintrag von Schmutz oder Staub, der evtl. von dem Primärfilterelement abfällt, in die Reinluftzone zu verhindern.

In bevorzugter Weise ist das Sekundärfilterelement aus Polytetrafluorethylen (PTFE) und in Form einer Membran aufgebaut. Eine solche Membran ist z. B. auf ein Starrkörpermedium auflaminiert. Das Starrkörpermedium kann ein poröser Kunststoffkörper sein, wie beispielsweise gesintertes Polyethylen, auf dem eine PTFE-Membran auflaminiert ist.

Gemäß einer weiteren Ausgestaltung der Erfindung besteht die Einrichtung aus einem oder mehreren Filterkerzen-Arrays, wobei jedes Array in einem gemeinsamen Rahmen gelagert ist. Damit kann eine große Filterfläche erreicht werden, und es besteht die Möglichkeit, die Filterkerzen mit dem jeweiligen Rahmen, der in einem entsprechenden Schacht angeordnet ist, auszutauschen.

In einer vorteilhaften Ausgestaltung dient der Rahmen zur Befestigung und Abdichtung des Vliesfilters. Dies bedeutet, dass im Befestigungsbereich des Rahmens an einer Halterung der Vliesfilter eingespannt ist und damit einerseits eine Abdichtung zwischen Halterung und Rahmen bewirkt, andererseits gleichzeitig aber auch die Fixierung des Vliesfilters erfolgt. Nach einer weiteren Ausgestaltung der Erfindung sind mehrere Rahmen parallel und unmittelbar benachbart nebeneinander angeordnet, wobei jeder Rahmen gleichzeitig die Fixierung des Vliesfilters bewirkt.

Zweckmäßigerweise weist jedes der Filterkerzen-Arrays ein eigenes schlauch- bzw. beutelförmiges Vliesfilterelement auf. Dies hat den Vorteil, dass ein einfacher Austausch eines Vliesfilters durch Ausbau einer Filterkerzenreihe möglich ist.

Weiterbildungsgemäß kann der Vliesfilter bzw. das Sekundärfilterelement mit einer katalytisch wirksamen Schicht versehen sein. Dies kann ein Mangandioxid, Kupferoxid oder Ferrioxid sein, welches entsprechend aktiviert wird, so dass durch diese katalytische Wirkung beispielsweise CO in CO₂ umgewandelt wird.

Gemäß einer weiteren Ausgestaltung der Erfindung ist wenigstens ein Drucksensor zur Ermittlung der Druckdifferenz zwischen Rohluftseite und Reinluftseite vorgesehen, wobei die Signale des Drucksensors unmittelbar an der Einrichtung angezeigt oder auch über ein Fernwartungssystem an eine zentrale Wartungsstelle übermittelt werden können.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Kurze Beschreibung der Zeichnungen

Die Erfindung wird nachfolgend anhand von Zeichnungen näher erläutert.
Es zeigen:

Figur 1 einen einzelnen Starrkörperfilter mit einem schlauchförmigen Vliesfilter,

Figur 2 eine Filterkerzenreihe im Vertikalschnitt,

Figur 2a die Filterkerzenreihe gem. Schnitt A-A der Figur 2 und

Figur 3 eine gesamte Einrichtung zum Reinigen von Luft.

### Ausführungsform(en) der Erfindung

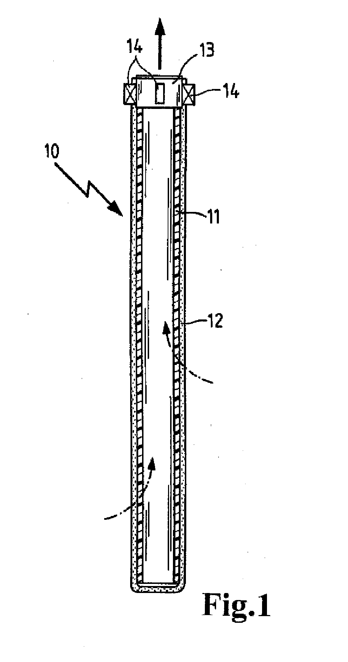

In Figur 1 ist ein Filterelement 10 gezeigt. Dieses besteht aus einem Starrkörperfilter 11 und einem schlauchförmigen Vliesfilter 12. Der Starrkörperfilter 11 weist im oberen Bereich eine Aufnahme 13 auf. Dies kann beispielsweise eine Hülse sein, in welchem der Starrkörperfilter 11 befestigt ist. An dieser Aufnahme 13 ist das Vliesfilter 12 über eine Befestigungsstelle 14 fixiert. Der Starrkörperfilter 11 selbst besteht aus einem Trägermaterial, beispielsweise einem gesinterten Kunststoffmaterial, auf dem sich eine PTFE-Membran befindet. Der Vliesfilter 12 kann unmittelbar an der PTFE-Membran anliegen. Es besteht aber auch die Möglichkeit, einen Abstand zwischen der Membran und dem Vliesfilter vorzusehen. Der Starrkörperfilter ist konzentrisch in Form einer Röhre aufgebaut, die Luft strömt von außen durch das Vliesfilter hindurch, anschließend durch die Membran und durch den Stützkörper nach innen. Im inneren Bereich des Starrkörperfilters wird sie in Pfeilrichtung nach oben gereinigt abgeleitet.

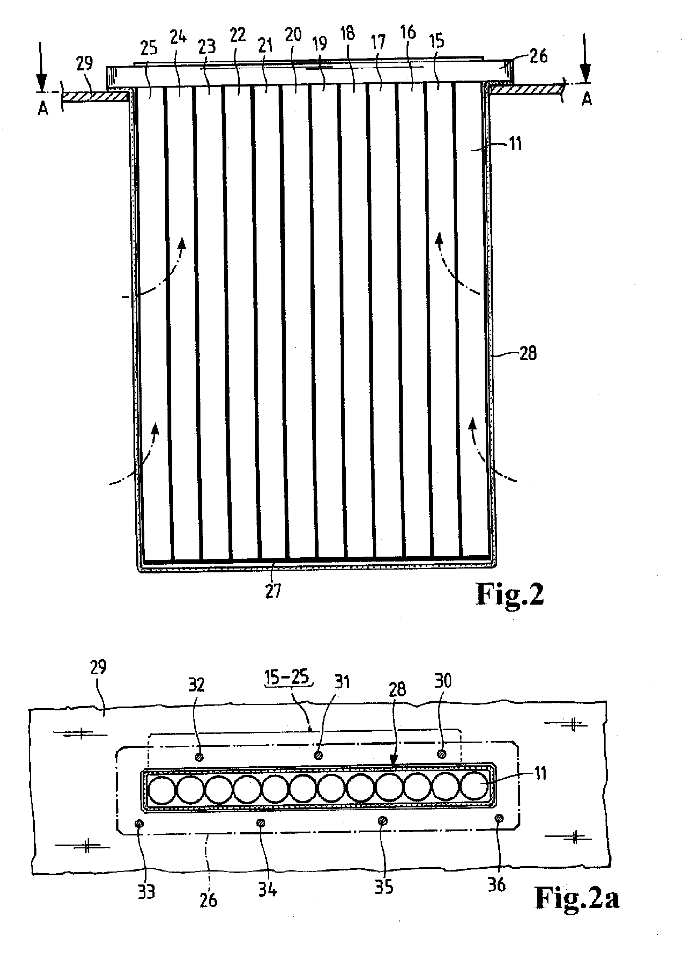

Figur 2 zeigt eine Reihe von Filterkerzen in einem Filter-Array, wobei die einzelnen Starrkörperfilter 11 und 15 bis 25 identisch aufgebaut sind und von ihrem Aufbau her dem in Figur 1 beschriebenen Filter entsprechen. Diese sind in einer gemeinsamen Aufnahme 26 befestigt. Diese Aufnahme ist beispielsweise ein Kunststoffblock, der entsprechende Öffnungen aufweist, in denen diese Starrkörperfilter eingeklebt oder eingeschweißt sind. Die Filterelemente 11, 15 bis 25 können im unteren Bereich über eine gemeinsame Befestigungsschiene 27 miteinander verbunden sein. Aufgrund der hängenden Bauweise genügt es aber auch, diese lediglich in der Aufnahme 26 zu fixieren. Das Vliesfilter 28 umschließt sämtliche Röhren und ist in Form einer einzigen großen Tasche ausgebildet, die sich bis in die Aufnahme 26 erstreckt. Dort erfolgt sowohl die Befestigung des gesamten Blockes als auch des Vliesfilters 28 an einem Träger 29. Zwischen dem Träger 29, welcher beispielsweise an einem Metallgestell befestigt ist und der Aufnahme 26 wird der obere Bereich des Vliesfilters 28 eingespannt und damit auch gleichzeitig abgedichtet. Die zu reinigende Luft strömt auch hier von außen durch das Vliesfilter 28 hindurch, dann durch die einzelnen Starrkörperfilter und wird anschließend oben im Bereich der Aufnahme ausgeleitet.

Figur 2a zeigt eine Draufsicht auf die Filterkerzenreihe, die in der Aufnahme 26 befestigt ist. Gleiche Teile sind mit gleichen Bezugszeichen versehen. Die Aufnahme 26 wird beispielsweise über Schrauben 30, 31, 32, 33, 34, 35, 36 an dem Träger 29 befestigt. Der Vliesfilter 28 ist umlaufend eingespannt und abgedichtet.

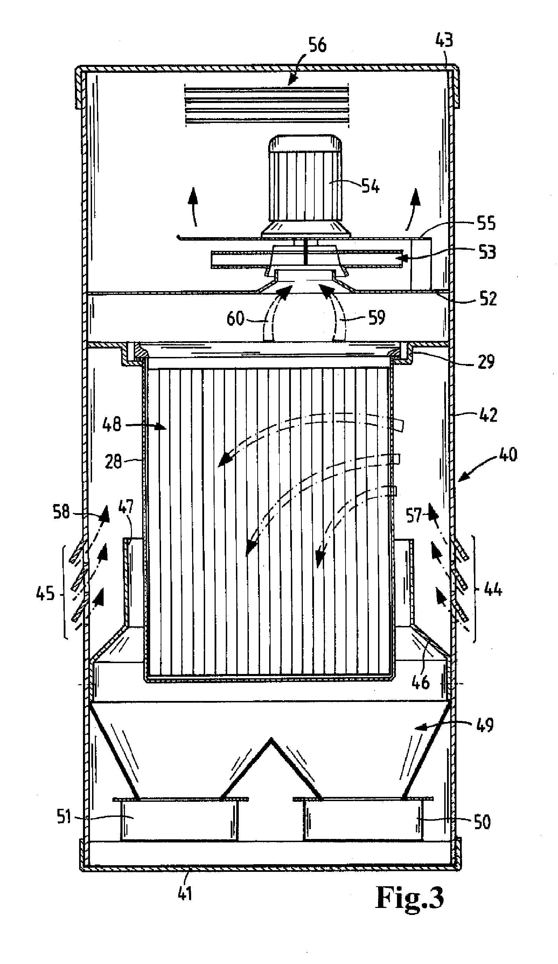

Figur 3 zeigt eine komplette Einrichtung zum Reinigen von Luft, welche stationär an besonders stark staubbelasteten bzw. feinstaubbelasteten Innen- oder Außenbereichen aufgestellt werden kann. In einem Gehäuse 40 befindet sich die gesamte Filtereinrichtung. Das Gehäuse 40 besteht aus einem Boden 41, Wände 42 sowie einer Abdeckung 43. Das Gehäuse weist Einströmschlitze 44, 45 auf sowie hinter den Einströmschlitzen angeordnete Leitbleche 46, 47. Zentral innerhalb des Gehäuses 40 befindet sich die Filtereinrichtung 48, wie sie in Figur 2 beschrieben wurde. Innerhalb des Gehäuses 40 können mehrere dieser Filtereinrichtungen hintereinander angeordnet sein.

In der Figur ist lediglich eine Filtereinrichtung dargestellt, selbstverständlich besteht die Möglichkeit, eine Vielzahl von Filtereinrichtungen unmittelbar benachbart anzuordnen, so dass bei einem Gehäuse, das eine quadratische Grundfläche aufweist, zehn bis fünfzehn dieser Filtereinrichtungen eingebaut werden können. Die Filtereinrichtungen sind auf einem gemeinsamen Träger 29 gelagert. Unterhalb der Filtereinrichtungen befindet sich ein Schmutzsammelraum 49. Der von den Filtereinrichtungen abfallende Schmutz kann von dort in zwei Auffangbehälter 50, 51 fallen und entsorgt werden. Oberhalb des Trägers 29 befindet sich zunächst ein Luftleitblech 52 und oberhalb des Luftleitbleches 52 ein Gebläse 53, das von einem Elektromotor 54 angetrieben wird. Der Elektromotor 54 ist auf einem Trägerflansch 55 oberhalb des Gebläses 53 befestigt. Gleichzeitig befinden sich im Bereich des Elektromotors 54 Auslassschlitze 56 im Gehäuse. In der Figur sind die Auslassschlitze der hinteren Wand dargestellt, selbstverständlich können auch an der vorderen Wand oder an den beiden Seitenwänden Auslassschlitze vorgesehen sein. Sofern - wie dargestellt - die Einströmschlitze sich an den Seitenwänden befinden, ist es günstig, die Auslassschlitze an der vorderen und hinteren Wand anzuordnen. Dadurch ergibt sich eine optimale Luftreinigung der Umgebungsluft, da ein kontinuierlicher Kreislauf der gereinigten Luft entsteht.

Das Gehäuse 40 ist im Bereich des Elektromotors und der Auslassschlitze schallgedämpft, so dass keine oder nur geringe Arbeitsgeräusche nach außen gelangen. Die zu reinigende Luft strömt gemäß den Pfeilen 57, 58 in das Gehäuse 40 ein, verteilt sich auf die einzelnen Filtereinrichtungen 48, strömt dort zunächst durch den jeweiligen Vliesfilter 28 und anschließend durch die Starrkörperfilter und verlässt gemäß den Pfeilen 59, 60 die Röhren. Von dem Gebläse wird die gereinigte Luft nach oben transportiert und strömt über die Auslassschlitze 56 ab. Aufgrund des Filteraufbaus besteht die Möglichkeit, einen Luftdurchsatz von bis zu 10 m³/min. zu erzielen. Zur Abreinigung der Filterelemente bzw. des Vliesfilters werden die einzelnen Filtereinrichtungen 48 von dem Träger 29 gelöst und nach oben herausgezogen werden. Der Vliesfilter 28 wird ebenfalls nach oben herausgezogen und durch einen neuen Vliesfilter ersetzt. Da der Vliesfilter einen Abscheidegrad von 99,99 % aufweist, ist eine Reinigung des Starrkörperfilters 11 selbst nicht erforderlich.

Es besteht auch die Möglichkeit, die Filtereinrichtungen 48 von einer Seite her in das Gehäuse derart einzubauen, dass die einzelnen Filterelemente waagerecht verlaufen. Dieser Einbau ermöglicht ein einfaches Austauschen der einzelnen Vliesfilter ohne ein Entfernen des Lüftungssystems, das sich im oberen Bereich des Gehäuses befindet.

Die gesamte Einrichtung wird stationär oder mobil in Bereichen kleiner bis hoher Staubkonzentrationen angeordnet. Die gereinigte Luft wird dem Bereich mit der höheren lokalen Staubkonzentration zugeführt und senkt damit die lokale Konzentration signifikant ab.

## Patentansprüche

1. Einrichtung zum Reinigen von Luft, bestehend aus einem Gehäuse, einem in dem Gehäuse angeordneten Gebläse sowie einem Filtersystem, wobei das Gehäuse Einlassöffnungen zum Zuführen der zu reinigenden Luft und Auslassöffnungen zum Ableiten der gereinigten Luft aufweist und wobei das Filtersystem aus folgenden Filtern besteht: wenigstens einem schlauch- oder beutelförmigen Vliesfilter, der über einer Trägerstruktur angeordnet ist und wenigstens einem Sekundärfilterelement, welches eine Filterfeinheit aufweist, die geringer ist als die Filterfeinheit des Vliesfilters, und wobei die gesamte Einrichtung stationär oder mobil in Bereichen hoher Staubkonzentrationen angeordnet ist.

2. Einrichtung nach Anspruch 1, wobei die Trägerstruktur für den Vliesfilter von dem Sekundärfilterelement gebildet ist.

3. Einrichtung nach Anspruch 1 oder 2, wobei das Sekundärfilterelement aus Polytetrafluorethylen (PTFE) besteht und in Form einer Membran aufgebaut ist.

4. Einrichtung nach Anspruch 1, 2 oder 3, wobei das Sekundärfilterelement aus einzelnen Filterkerzen besteht und eine Reihe von Filterkerzen in einem gemeinsamen Rahmen gelagert ist.

5. Einrichtung nach Anspruch 4, **dadurch gekennzeichnet, dass** der Rahmen zur Befestigung und Abdichtung des Vliesfilters ausgebildet ist.

6. Einrichtung nach Anspruch 5, **dadurch gekennzeichnet, dass** mehrere Rahmen parallel nebeneinander in dieser angeordnet sind und jeder Rahmen eine Befestigungs- und Abdichtstruktur für den Vliesfilter aufweist.

7. Einrichtung nach einem der vorherigen Ansprüche, **dadurch gekennzeichnet, dass** der Vliesfilter und/oder das Sekundärfilterelement mit einer katalytisch wirksamen Schicht versehen ist.

8. Einrichtung nach einem der vorherigen Ansprüche, **dadurch gekennzeichnet, dass** mehrere Filterkerzen, die in einem gemeinsamen Rahmen gelagert sind, von einem einzigen schlauch- oder beutelförmigen Vliesfilter ummantelt sind.

9. Einrichtung nach einem der vorherigen Ansprüche, **dadurch gekennzeichnet, dass** ein Drucksensor zur Ermittlung der Druckdifferenz zwischen Rohluftseite und Reinluftseite vorgesehen ist und dieser Drucksensor ein Signal für den Austausch der Filterelemente erzeugt.

10. Filtereinrichtung nach einem der vorherigen Ansprüche, **dadurch gekennzeichnet, dass** eine Fernwartungseinrichtung vorgesehen ist, mit welcher Kenndaten dieser Einrichtung an eine zentrale Wartungsstelle übertragen werden können.
